# EUROPÄISCHE PATENTSCHRIFT

(11) **EP 3 953 640 B1**
(45) Veröffentlichungstag und Bekanntmachung des Hinweises auf die Patenterteilung: **13.03.2024**
(21) Anmeldenummer: 20714494.0
(22) Anmeldetag: 16.03.2020
(51) Int. Cl.: F21S 41/675, F21S 41/39, B60Q 1/068

(54) **LICHTMODUL FÜR EINEN KRAFTFAHRZEUGSCHEINWERFER**
LIGHT MODULE FOR A MOTOR VEHICLE HEADLIGHT
MODULE LUMINEUX POUR UN PHARE DE VÉHICULE AUTOMOBILE

(30) Priorität: 11.04.2019 EP 19168608
(43) Veröffentlichungstag der Anmeldung: 16.02.2022
(73) Patentinhaber: ZKW Group GmbH, 3250 Wieselburg (AT)
(72) Erfinder: MITTERLEHNER, Stefan, 3240 Mank (AT)
(74) Vertreter: Patentanwaltskanzlei Matschnig & Forsthuber OG
(86) Internationale Anmeldenummer: PCT/EP2020/057066
(87) Internationale Veröffentlichungsnummer: WO 2020/207706

(56) Entgegenhaltungen:
- WO-A1-2017/143372
- WO-A2-2017/045004
- DE-A1- 10 344 173
- FR-A1- 3 008 477
- FR-A1- 3 062 458
- FR-A1- 3 063 396
- JP-A- 2016 091 976

## Beschreibung

Die Erfindung betrifft ein Lichtmodul für einen Kraftfahrzeugscheinwerfermit den Merkmalen des Oberbegriffs des Anspruchs 1.

Darüber hinaus betrifft die Erfindung einen Kraftfahrzeugscheinwerfer mit zumindest einem solchen Lichtmodul.

Die Lichtmodule der oben genannten Art sind aus dem Stand der Technik bekannt, z.B. aus FR 3 008 477 A1. Bei den bekannten Lichtmodulen ist die Lichtumlenkvorrichtung zu dem Flächenlichtmodulator fix positioniert. Dadurch ist es äußerst schwer die Position des Lichtschwerpunktes zu ändern oder Verzerrungen in der Lichtverteilung zu kompensieren, die durch Linsentoleranzen bzw. -fehler des Abbildungssystems entstehen.

Darüber hinaus ist die ganze Spiegelmatrix des Flächenlichtmodulators in dem Leuchtbild enthalten, wodurch ein sogenanntes "Beleuchtungs-Overfill" bzw. ein sogenannter "Overfill-Bereich" entsteht. Der Overfill-Bereich entsteht durch das Licht, das zwar auf den Flächenlichtmodulator aber nicht auf die Spiegelmatrix einfällt. Dadurch wird die optische Effizienz verringert.

Die Aufgabe der vorliegenden Erfindung besteht darin, ein Lichtmodul bereitzustellen, bei dem Verzerrungen der Lichtverteilung bei gleichbleibender oder erhöhter optischer Effizienz reduziert werden können.

Die oben genannte Aufgabe wird mit einem Lichtmodul der oben genannten Art mit den zusätzlichen Merkmalen des Kennzeichens des Anspruches 1 gelöst.

Das Verstellsystem kann beispielsweise mechanisch und/oder elektromotorisch sein und mechanische und/oder elektromotorische Elemente umfassen.

Es kann mit Vorteil vorgesehen sein, dass die von der Lichtumlenkvorrichtung auf den Flächenlichtmodulator gelenkten Lichtstrahlen konvergieren oder divergieren.

Hinsichtlich Änderung des Abbildungsmaßstabs ist vorgesehen, dass das Verstellsystem zusätzlich dazu eingerichtet ist, das lichtumlenkende Element entlang einer dritten Achse, nämlich einer so genannten Verschub-Achse, zu verschieben, wobei die Verschub-Achse zu den mindestens zwei sich schneidenden Schwenk-Achsen vorzugsweise senkrecht verläuft. Dadurch kann beispielsweise die Größe des abzustrahlenden Leuchtbildes variiert und das Einstellen/Reduzieren des Overfill-Bereichs vereinfacht werden.

Dabei, wenn die von der Lichtumlenkvorrichtung auf den Flächenlichtmodulator gelenkten Lichtstrahlen konvergieren, kann ein Abstand zwischen der Lichtumlenkvorrichtung und dem Flächenlichtmodulator vergrößert werden, um die Größe des abzustrahlenden Leuchtbildes zu verringern. Wenn aber die von der Lichtumlenkvorrichtung auf den Flächenlichtmodulator gelenkten Lichtstrahlen divergieren, kann ein Abstand zwischen der Lichtumlenkvorrichtung und dem Flächenlichtmodulator verringert werden, um die Größe des abzustrahlenden Leuchtbildes zu verringern.

Es ist vorgesehen, dass das Verstellsystem drei Einstellschrauben, beispielsweise Kugelschrauben, aufweist.

Dabei kann es zweckdienlich sein, wenn die Einstellschrauben mechanisch und/oder elektromotorisch antreibbar sind.

Es kann zweckmäßig sein, wenn die mindestens zwei sich schneidenden Schwenk-Achsen orthogonal zueinander stehen, wobei die mindestens zwei sich schneidenden Schwenk-Achsen vorzugsweise eine vertikal verlaufende Achse und eine horizontal verlaufende Achse sind. Vorzugsweise wird durch die mindestens zwei sich scheidenden Achsen eine Ebene definiert, die orthogonal zur Hauptabstrahlrichtung des Lichtmoduls verläuft.

Das Lichtmodul kann mit Vorteil als ein Projektions-Lichtmodul ausgebildet sein. Das heißt, dass das Leuchtbild von dem Abbildungssystem direkt vor das Lichtmodul projiziert wird, ohne dass weitere optische Elemente dem Abbildungssystem im Lichtmodul nachgeordnet sind, und dass bei dem Abbildungssystem vorzugsweise nur Linsen und optional Blenden aber keine Reflektoren für Strahlformung eingesetzt werden. Diese Art von Lichtmodulen ist im Stand der Technik als auf dem Projektionsprinzip basierende Lichtmodule bekannt.

Bei einer bevorzugten Ausführungsform kann vorgesehen sein, dass das lichtumlenkende Element als ein gekrümmter Spiegel ausgebildet ist.

Es kann mit Vorteil vorgesehen sein, dass der gekrümmte Spiegel als ein Hohlspiegel, das heißt ein konkaver (nach innen gewölbter) Spiegel ist.

Darüber hinaus kann es mit Vorteil vorgesehen sein, wenn die lichtreflektierende Fläche des gekrümmten Spiegels einen im Wesentlichen parabolischen und/oder hyperbolischen Verlauf aufweist. Dabei sei angemerkt, dass eine zweidimensionale Fläche gleichzeitig einen parabolischen (entlang einer ersten Richtung) und einen hyperbolischen (entlang einer zweiten Richtung) Verlauf aufweisen kann.

Weitere Vorteile ergeben sich, wenn die lichtreflektierende Fläche des gekrümmten Spiegels zwei Symmetrieachsen aufweist, wobei vorzugsweise die lichtreflektierende Fläche bezüglich einer oder beider der zwei Symmetrieachsen spiegelsymmetrisch ausgebildet ist, wobei vorzugsweise eine erste Symmetrieachse horizontal verläuft und eine zweite Symmetrieachse vertikal verläuft. Durch die Symmetrieachsen kann ein zweidimensionales Koordinatensystem auf der lichtreflektierenden Fläche des Spiegels definiert werden. Die Fläche kann beispielsweise entlang der ersten Symmetrieachse einen parabolischen oder hyperbolischen Verlauf aufweisen. Genauso kann die Fläche entlang der zweiten Symmetrieachse einen parabolischen oder hyperbolischen Verlauf aufweisen, sodass beispielsweise ein Spiegel denkbar ist, der entlang einer Richtung im Wesentlichen hyperbolisch und entlang einer anderen Richtung parabolisch ist.

Besonders vorteilhaft ist die Ausführungsform, bei der jede Symmetrieachse mit der jeweiligen Schwenk-Achse zusammenfällt. Dabei werden beim Einstellen, also Ablenken des Strahlenganges, keine beziehungsweise möglichst geringe Verzerrungen erzeugt, die beispielsweise von dem "Ausscheren" des Spiegels um die Einstellachse herrühren können.

Hinsichtlich des verfügbaren Bauraums kann es von Vorteil sein, wenn das lichtumlenkende Element - im Betriebszustand des Lichtmoduls - die auf das lichtumlenkende Element einfallenden Lichtstrahlen in Bezug auf die Einfallsrichtung der auf das lichtumlenkende Element einfallenden Lichtstrahlen rückwärtsstreut.

Es kann zweckmäßig sein, wenn die Verschub-Achse im Wesentlichen parallel zu einer Hauptabstrahlrichtung des Lichtmoduls verläuft.

Darüber hinaus ist es zweckdienlich, wenn die Beleuchtungsvorrichtung im Wesentlichen parallel verlaufende Lichtstrahlen erzeugt.

Der Flächenlichtmodulator kann vorzugsweise als eine digital ansteuerbare Mikrospiegelvorrichtung, beispielsweise als ein DMD-Chip ausgebildet sein.

Außerdem kann mit Vorteil vorgesehen sein, dass die Lichtumlenkvorrichtung dazu eingerichtet ist, im Wesentlichen die gesamten auf die Lichtumlenkvorrichtung einfallenden Lichtstrahlen in Form eines konvergierenden beziehungsweise nicht divergierenden Strahlenbündels auf den Flächenlichtmodulator zu lenken.

Darüber hinaus kann es vorteilhaft sein, wenn alle Bauelemente des Lichtmoduls mit Ausnahme der Lichtumlenkvorrichtung in dem Lichtmodul im montierten Zustand starr, d.h. nicht beweglich, angeordnet sind. In diesem Fall ergibt sich der Vorteil, dass zur Justage des Lichtmoduls nur ein optisches Element - die Lichtumlenkvorrichtung - notwendig ist, wobei alle andere Bauelemente, wie z.B. die LED-Lichtquellen, der DMD und die Linsen usw., zueinander fix positioniert sind.

Es kann mit Vorteil vorgesehen sein, dass die Beleuchtungsvorrichtung eine oder mehrere Lichtquellen, beispielsweise halbleiterbasierten Lichtquellen, wie z.B. LED-Lichtquellen oder Laserdioden mit beispielsweise den Laserdioden vorgelagerten Lichtkonversionsmittel zur Umwandlung des Laserlichts einer vorgegebenen Farbe in im Wesentlichen weißes Licht umfasst.

Es kann zweckdienlich sein, wenn die Lichtquellen matrixartig, beispielsweise in einer 1x2-Matrix, 2x3-Matrix oder 3x4-Matrix angeordnet sind. Dabei kann beispielsweise die Robustheit des Lichtmoduls erhöht werden. Sollte z.B. eine der Lichtquellen ausfallen, kann mit den übrigen Lichtquellen entweder immer noch ausreichende Lichtleistung zur Erzeugung einer gesetzeskonformen Lichtverteilung bereitgestellt werden oder eine minimale Notfall-Lichtverteilung, mit der einen Bereich vor dem Lichtmodul noch ausreichend beleuchtet werden kann, um z.B. in die nächstliegende Werkstatt fahren zu können.

Bei einer bevorzugten Ausführungsform kann mit Vorteil vorgesehen sein, dass jeder Lichtquelle eine oder mehrere Optiken vorgelagert ist/ sind, um das von dieser Lichtquelle erzeugte Licht zu formen.

Es kann zweckmäßig sein, wenn die Optik(en) derart ausgebildet und/oder angeordnet ist(sind), dass sie das meiste, von den Lichtquellen abgegebene Licht einfängt/einfangen und in die nachfolgende(n) Optik(en) beziehungsweise auf das lichtumlenkende Element zu lenken.

Bei einer Ausführungsform kann es vorgesehen sein, dass die Optik(en) als Aufweitungsoptik(en) oder als Kollimatoroptik(en) ausgebildet ist(sind).

Das Verstellsystem ist vorzugsweise als ein Einstelldreieck-System ausgebildet (siehe z.B. die Anmeldungen EP 2803528 A1, A 50797/2015 der Anmelderin).

Unter dem Begriff "Einstelldreieck-System" wird im Zusammenhang mit der vorliegenden Erfindung generell ein Einstellsystem verstanden, welches über drei Stellelemente (z.B. Einstellschrauben) eine zu verstellende Vorrichtung verstellt. Dabei stehen die drei Stellelemente des Einstelldreieck-Systems mit der zu verstellenden Vorrichtung in Eingriff, wodurch drei Eingriffspunkte gebildet werden, die selbst ein Dreieck - ein Einstelldreieck - definieren.

Bei Flächenlichtmodulatoren handelt es sich um eine Art von Mikrospiegelaktoren, bei den die Modulation des Lichtes über eine Spiegelmatrix erfolgt. Die Spiegelmatrix ist üblicherweise auf einem Halbleiterchip angeordnet, wobei die Spiegelanzahl beispielsweise von einigen hundert bis zu mehreren Millionen Spiegeln variieren kann. Gesteuert von einem Mikrocontroller können die einzelnen Spiegel in der Matrix im Zeitverlauf (diskrete) Auslenkungen annehmen. Hierdurch kann die Ablenkung von Teilstrahlen beziehungsweise eine phasenschiebende Wirkung erzielt werden. Mithilfe einer matrixförmigen Anordnung können Flächenlichtmodulatoren das Licht einer Lichtquelle so ablenken, dass ein Bild beziehungsweise eine Lichtverteilung (mithilfe eines Abbildungssystems) projiziert wird. Beispiele für Flächenlichtmodulatoren sind das Digital Micromirror Device (DMD) welche die technologische Basis von Produkten wie Digital Light Processing (DLP) darstellen.

Die Erfindung samt weiteren Vorteilen ist im Folgenden an Hand beispielhafter Ausführungsformen näher erläutert, die in der Zeichnung veranschaulicht sind. In dieser zeigt
- Fig. 1: eine Explosionsdarstellung eines Lichtmoduls;
- Fig. 2: einen vergrößerten Ausschnitt der Explosionsdarstellung der Fig. 1, und
- Fig. 3: eine Lichtumlenkvorrichtung des Lichtmoduls der Fig. 1.

Zur Vereinfachung der Lesbarkeit und da, wo es zweckdienlich ist, sind die Figuren mit Bezugsachsen versehen. Diese Bezugsachsen beziehen sich auf eine fachgerechte Einbaulage des Erfindungsgegenstands in einem Kraftfahrzeug und stellen ein kraftfahrzeugbezogenes Koordinatensystem dar.

Darüber hinaus soll es klar sein, dass richtungsbezogene Begriffe, wie "horizontal", "vertikal", "oben", "unten" etc. im Zusammenhang mit der vorliegenden Erfindung in einer relativen Bedeutung zu verstehen sind und sich entweder auf die oben erwähnte fachgerechte Einbaulage des Erfindungsgegenstands in einem Kraftfahrzeug oder auf eine fachübliche Ausrichtung einer abgestrahlten Lichtverteilung im Lichtbild beziehungsweise im Verkehrsraum beziehen.

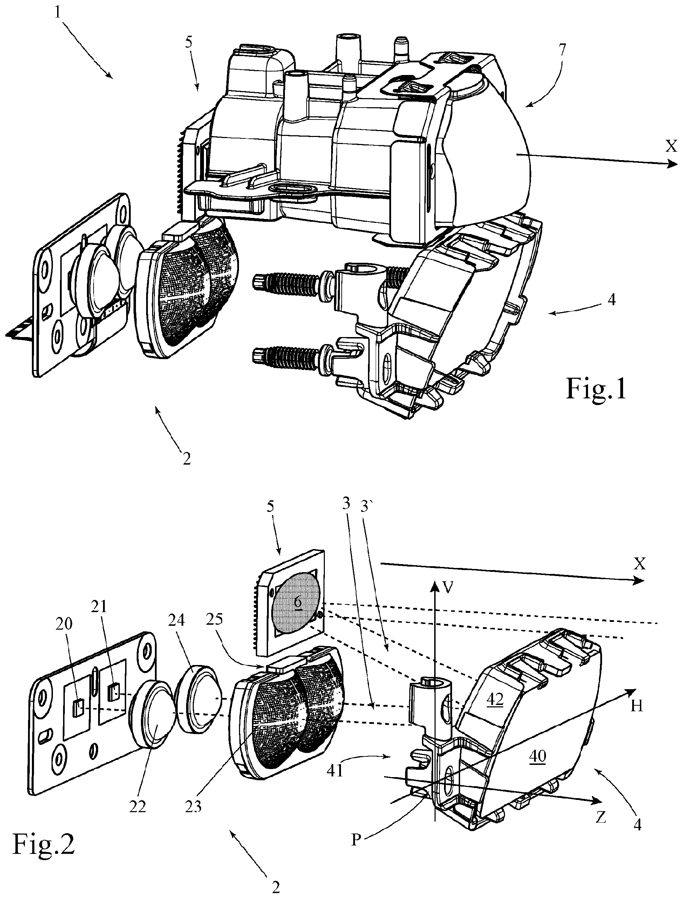

Zunächst wird auf Figuren 1 und 2 Bezug genommen. Diese zeigen ein Lichtmodul 1 für einen Kraftfahrzeugscheinwerfer, das dem erfindungsgemäßen Lichtmodul entspricht. Das Lichtmodul 1 umfasst eine Beleuchtungsvorrichtung **2.** Die Beleuchtungsvorrichtung 2 kann im Allgemeinen eine oder mehrere Lichtquellen **20, 21,** beispielsweise halbleiterbasierten Lichtquellen, wie LED-Lichtquellen oder Laserdioden mit beispielsweise den Laserdioden vorgelagerten Lichtkonversionsmittel zur Umwandlung des Laserlichts einer vorgegebenen Farbe in im Wesentlichen weißes Licht umfassen. Die Lichtquellen 20, 21 können matrixartig angeordnet sein - Figuren 1 und 2 zeigen beispielsweise eine 1x2-Matrix von LED-Lichtquellen 20, 21. Jeder Lichtquelle 20, 21 können im Allgemeinen eine oder mehrere Optiken **22, 23, 24, 25** vorgelagert sein, um das von dieser Lichtquelle 20, 21 erzeugte Licht zu formen. Vorzugsweise ermöglichen die Optiken 22 und 24, das meiste von den Lichtquellen 20, 21 abgegebene Licht einzufangen und in die nachfolgenden Optiken 23, 25 zu lenken. Figuren 1 und 2 ist zu entnehmen, dass jeder Lichtquelle 20 bzw. 21 jeweils eine Aufweitungsoptik 22 bzw. 24 und jeweils eine Kollimatoroptik 23 bzw. 25 nachgelagert sein kann, wobei die jeweilige Aufweitungsoptik 22, 24 das von der entsprechenden Lichtquelle 20, 21 abgegebene Licht zu einem divergierenden Lichtbündel formt und die Kollimatoroptik 23, 25 das divergierende Lichtbündel kollimiert. Im Allgemeinen erzeugt die Beleuchtungsvorrichtung 2 Lichtstrahlen mit einem vorgegebenen Strahlengang **3.** Vorzugsweise verlaufen die Lichtstrahlen im Wesentlichen parallel.

Die durch die Beleuchtungsvorrichtung 2 erzeugten Lichtstrahlen propagieren in Richtung einer Lichtumlenkvorrichtung **4,** die der Beleuchtungsvorrichtung 2 zur Umlenkung des vorgegebenen Strahlengangs 3 nachgeordnet ist.

Die Lichtumlenkvorrichtung 4 lenkt die Lichtstrahlen auf einen Flächenlichtmodulator **5** um. Der Flächenlichtmodulator 5 ist also der Lichtumlenkvorrichtung 4 nachgeordnet. Dabei lenkt die Lichtumlenkvorrichtung 4 im Wesentlichen die gesamten auf sie einfallenden Lichtstrahlen auf den Flächenlichtmodulator 5 um, wodurch auf dem Flächenlichtmodulator 5 ein Leuchtbild **6** erzeugt wird. Wie bereits erwähnt, kann die Auslenkung der einzelnen Mikrospiegel des Flächenlichtmodulators 5 geändert werden. Dadurch kann das Leuchtbild 6 modifiziert werden. Auf diese Weise können beispielsweise ADB-Funktionen des Lichtmoduls verwirklicht werden.

Des Weiteren umfasst das Lichtmodul 1 ein Abbildungssystem **7,** das dem Flächenlichtmodulator 5 vorgelagert ist und dazu eingerichtet ist, das Leuchtbild 6 in Form einer (hier nicht gezeigten) Lichtverteilung vor das Lichtmodul abzubilden. Da zwischen dem Flächenlichtmodulator 5 und dem Abbildungssystem 7 keine weiteren optischen Elemente vorhanden sind und das Abbildungssystem 7 nur Linsen und optional Blenden als optische Elemente enthält, handelt es sich bei dem Lichtmodul 1 um ein Lichtmodul des Projektionstyps.

Figur 1 zeigt ein Abbildungssystem 7, das als ein Objektiv ausgebildet ist, das zwei oder mehr in einem Linsenhalter eingefassten Linsen umfasst. Das gezeigte Objektiv weist drei Linsen auf. Das Abbildungssystem kann aber auch als eine einfache Linse, beispielsweise eine Freiformlinse ausgebildet sein. Alle (nichtausgelenkte) Mikrospiegel des Flächenlichtmodulators 5 liegen (vollständig) vorzugsweise in einer Brennebene des Abbildungssystems 7.

Die Lichtumlenkvorrichtung 4 weist ein lichtumlenkendes Element **40** auf, das sowohl der Beleuchtungsvorrichtung 2 als auch dem Flächenlichtmodulator 5 zugewandt sein kann. Darüber hinaus umfasst die Lichtumlenkvorrichtung ein Verstellsystem **41,** das dazu eingerichtet ist, das lichtumlenkende Element 40 um mindestens zwei sich in einem Punkt **P** schneidende Schwenk-Achsen **H, V** zu verschwenken und dadurch den Strahlengang **3'** zwischen der Lichtumlenkvorrichtung 4 und dem Flächenlichtmodulator 5 zu verändern. Der Strahlengang 3' zwischen der Lichtumlenkvorrichtung 4 und dem Flächenlichtmodulator 5 ist der von der Lichtumlenkvorrichtung 4 umgelenkte und vorzugsweise modifizierte vorgegebene Strahlengang 3. Die mindestens zwei sich schneidenden Schwenk-Achsen H, V können beispielsweise orthogonal zueinander stehen, wobei vorzugsweise eine davon vertikal und die andere horizontal verläuft. D.h. beim Justieren beziehungsweise Einstellen des Lichtmoduls 1 kann das lichtumlenkende Element 40 mittels des Verstellsystems 41 eingestellt, beispielsweise verschwenkt, verdreht oder verkippt werden. Hierdurch kann beispielsweise die Position des Leuchtbilds 6 auf dem Flächenlichtmodulator 5 geändert werden. Die Lichtumlenkvorrichtung 4 kann vorzugsweise die einfallenden Lichtstrahlen nicht nur umlenken sondern auch zusammen (konvergieren) oder auseinanderlaufen lassen (divergieren).

Darüber hinaus kann das Verstellsystem 41 dazu eingerichtet sein, das lichtumlenkende Elements 40 entlang einer dritten zu den mindestens zwei sich schneidenden Schwenk-Achsen H, V senkrecht verlaufenden Verschub-Achse Z zu verschieben. Die Verschub-Achse Z kann zu der Hauptabstrahlrichtung X des Lichtmoduls 1 parallel verlaufen, wie dies in den Figuren 1 und 2 zu erkennen ist. Hierdurch kann die Größe des Leuchtbilds 6 auf dem Flächenlichtmodulator 5 geändert werden.

Durch Verschwenken, Verdrehen oder Verkippen um eine oder beide Schwenk-Achse(n) H, V kann das Leuchtbild 6 (an dem Flächenlichtmodulator 5) verschoben und/oder verkippt werden.

Durch Verschieben entlang der Verschub-Achse Z kann das Leuchtbild 6 vergrößert oder verkleinert beziehungsweise sein Maßstab geändert werden, wodurch beispielsweise auch der Abbildungsmaßstab des Lichtmoduls geändert werden kann. Figur 2 lässt beispielsweise erkennen, dass das Leuchtbild 6 einen oben genannten Overfill-Bereich aufweist. Durch das Verschieben entlang der Verschub-Achse Z kann dieser Overfill-Bereich reduziert bis vermieden werden.

Die Lichtumlenkvorrichtung 4 kann ferner einen Tragrahmen **42,** wie eine Fassung umfassen. Das lichtumlenkende Element 40 ist in dem Tragrahmen 42 (fest) gehalten beziehungsweise eingefasst. Das Verstellsystem 41 kann dabei mit dem Tragrahmen 42 in Eingriff stehen und dazu eingerichtet sein, den Tragrahmen 42 mit dem darin eingefassten lichtumlenkenden Element 40 um die mindestens zwei sich schneidenden Schwenk-Achsen H, V zu verschwenken und optional entlang der Verschub-Achse Z zu verschieben.

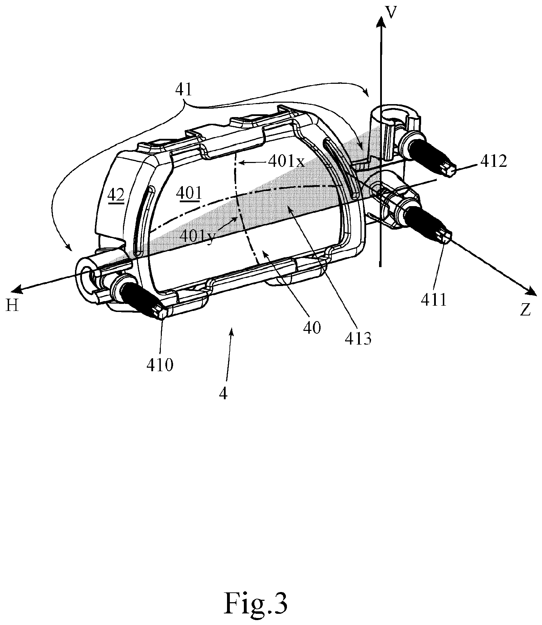

Wie bereits erwähnt, ist das Verstellsystem 41 mit Vorzug als ein Einstelldreieck-System ausgebildet, das über drei Stellelemente, wie z.B. Einstellschrauben 410, 411, 412 das beispielsweise in einem Tragrahmen 42 eingefasste lichtumlenkende Element 40 verstellt. Die Einstellschrauben 410, 411, 412, die in den Figuren 1 und 3 zu sehen sind, sind als Kugelschrauben ausgebildet sind, deren Köpfe in den dazu korrespondierenden Aufnahmen bzw. Pfannen des Tragrahmens 42 aufgenommen sind. Die Einstellschrauben stehen also mit dem Tragrahmen 42 in Eingriff, wodurch drei Eingriffspunkte - auch als Lagerstellen genannt - gebildet werden, die selbst ein Dreieck 413 - sogenanntes Einstelldreieck - definieren. Die Stellelemente des Verstellsystems 41 können auch direkt mit den entsprechenden Bereichen des lichtumlenkenden Elements 40 - an entsprechenden Lagerstellen - in Eingriff stehen ohne dass es eines Tragrahmens 42 bedarf. Diese Bereiche können ebenfalls wie Pfannen beziehungsweise Aufnahmen für Köpfe von Kugelschrauben ausgebildet sein.

Die Stellelemente, wie z.B. die Einstellschrauben 410, 411, 412 können mittels eines mechanischen und/oder elektromotorischen hier nicht gezeigten Antriebs antreibbar sein.

Werden nun ein oder zwei Stellelemente verstellt (z.B. die Kugelschrauben ein- und ausgeschraubt), kann das oben beschriebene Verschwenken, Verdrehen oder Verkippen um eine oder beide Schwenk-Achse(n) H, V verwirklicht werden, wodurch das Leuchtbild 6 (an dem Flächenlichtmodulator 5) verschoben und/oder verkippt werden kann.

Werden alle drei Stellelemente verstellt (z.B. die Kugelschrauben ein- und ausgeschraubt), kann das oben beschriebene Verschieben entlang der Verschub-Achse Z verwirklicht werden, wodurch das Leuchtbild 6 (an dem Flächenlichtmodulator 5) vergrößert oder verkleinert werden kann.

In der Figur 3 wird verdeutlicht, dass das lichtumlenkende Element 40 als ein gekrümmter Spiegel, beispielsweise als ein Hohlspiegel, ausgebildet sein kann. Die lichtreflektierende Fläche **401** des hier konkaven, nach innen gewölbten Spiegels kann dabei zwei Symmetrieachsen **401x, 401y** aufweisen. Die lichtreflektierende Fläche 401 kann entlang der durch die jeweiligen Symmetrieachsen 401x, 401y definierten unterschiedlichen Richtungen unterschiedliche oder gleiche Verläufe aufweisen, wie z.B. parabolisch und hyperbolisch oder parabolisch und parabolisch und so weiter. Die lichtreflektierende Fläche 401 kann bezüglich einer oder beider dieser Symmetrieachsen 401x, 401y spiegelsymmetrisch ausgebildet sein. Vorzugsweise verläuft eine erste Symmetrieachse 401x horizontal und eine zweite Symmetrieachse 401y vertikal. Jede Symmetrieachse 401x, 401y kann mit der jeweiligen Schwenk-Achse H, V zusammenfallen. Beispielsweise, wie Figur 3 zu entnehmen ist, kann die horizontal verlaufende Achse 401x mit der horizontalen Schwenk-Achse H und die vertikal verlaufende Achse 401y mit der horizontalen Schwenk-Achse H zusammenfallen. Dabei können ungewollte Verzerrungen bei einer Verstellung des Spiegels geringgehalten werden. Der Brennpunkt des gekrümmten Spiegels kann beispielsweise an der Spiegelmatrix des Flächenlichtmodulators 5 liegen.

Das lichtumlenkende Element 40 kann auch als ein Spiegel mit einer freiförmig geformten Reflektorfläche ausgebildet sein, wobei die Form des Spiegels an die Form des (gewünschten) Leuchtbildes 6 auf dem Flächenlichtmodulator (auf dem DMD-Chip) 5 angepasst ist.

Es sei an diese Stelle angemerkt, dass die Abstände zwischen der Beleuchtungsvorrichtung 2 und der Lichtumlenkvorrichtung 4 und zwischen der Lichtumlenkvorrichtung 4 und dem Flächenlichtmodulator 5 im Prinzip unterschiedlich sein können, sodass die Gesamtgröße des Lichtmoduls 1 an verschiedene Bauraumvorgaben angepasst werden kann. Sobald der Bauraum vorgegeben ist, werden die Beleuchtungsvorrichtung 2, die Lichtumlenkvorrichtung 4, der Flächenlichtmodulator 5 und das Abbildungssystem 7 zueinander fix positioniert, um die Vorgabe zu erfüllen.

Figur 3 lässt erkennen, dass das lichtumlenkende Element 40 die auf das lichtumlenkende Element 40 einfallenden Lichtstrahlen in Bezug auf die Einfallsrichtung (X oder Z) der auf das lichtumlenkende Element 40 einfallenden Lichtstrahlen rückwärtsstreuen kann.

Der Flächenlichtmodulator 5 ist vorzugsweise als eine digitale Mikrospiegelvorrichtung - DMD - ausgebildet.

Im Allgemeinen kann die Lichtumlenkvorrichtung 2 im Wesentlichen die gesamten auf die Lichtumlenkvorrichtung 2 einfallenden Lichtstrahlen in Form eines konvergierenden beziehungsweise nicht divergierenden Strahlenbündels auf den Flächenlichtmodulator 5 lenken.

Es ist ersichtlich, dass Abänderungen und/oder Hinzufügungen von Teilen an dem zuvor beschriebenen Lichtmodul erfolgen können, ohne dass vom Gebiet und Umfang der vorliegenden Erfindung abgewichen wird.

Ebenfalls ersichtlich ist, dass die Erfindung zwar in Bezug auf einige konkrete Beispiele beschrieben worden ist, ein Fachmann jedoch sicher in der Lage sein sollte, viele andere entsprechende Formen eines Lichtmoduls zu erhalten, die die in den Ansprüchen dargelegten Eigenschaften aufweisen und damit alle in den dadurch festgelegten Schutzumfang fallen.

Die Bezugsziffern in den Ansprüchen dienen lediglich zum besseren Verständnis der vorliegenden Erfindung und bedeuten auf keinen Fall eine Beschränkung der vorliegenden Erfindung.

## Patentansprüche

1. Lichtmodul für einen Kraftfahrzeugscheinwerfer umfassend
- eine Beleuchtungsvorrichtung (2), die dazu eingerichtet ist, Lichtstrahlen mit einem vorgegebenen Strahlengang (3) zu erzeugen,
- eine Lichtumlenkvorrichtung (4), die der Beleuchtungsvorrichtung (2) zur Umlenkung des vorgegebenen Strahlengangs (3) nachgeordnet ist, und
- einen der Lichtumlenkvorrichtung (4) im weiteren Verlauf der Lichtstrahlen nachgeordneten Flächenlichtmodulator (5), wobei die Lichtumlenkvorrichtung (4) dazu eingerichtet ist, im Wesentlichen die gesamten auf die Lichtumlenkvorrichtung (4) einfallenden Lichtstrahlen auf den Flächenlichtmodulator (5) zu lenken, um auf dem Flächenlichtmodulator (5) ein abzustrahlendes Leuchtbild (6) zu erzeugen, sowie
- ein Abbildungssystem (7), das dazu eingerichtet ist, das Leuchtbild (6) in Form einer Lichtverteilung vor das Lichtmodul abzubilden, wobei die Lichtumlenkvorrichtung (4) ein lichtumlenkendes Element (40) und ein Verstellsystem (41) umfasst, wobei das Verstellsystem (41) dazu eingerichtet ist, das lichtumlenkende Element (40) um mindestens zwei sich schneidende Schwenk-Achsen (H, V) zu verschwenken und dadurch den Strahlengang (3') zwischen der Lichtumlenkvorrichtung (4) und dem Flächenlichtmodulator (5) zu verändern, **dadurch gekennzeichnet, dass** die Lichtumlenkvorrichtung (4) ferner einen Tragrahmen (42) umfasst, in dem das lichtumlenkende Element (40) eingefasst ist, das Verstellsystem (41) mit dem Tragrahmen (42) in Eingriff steht und dazu eingerichtet ist, den Tragrahmen (42) mit dem darin eingefassten lichtumlenkenden Element (40) um die mindestens zwei sich schneidenden Schwenk-Achsen (H, V) zu verschwenken und dadurch den Strahlengang (3') zwischen der Lichtumlenkvorrichtung (4) und dem Flächenlichtmodulator (5) zu verändern, wobei das Verstellsystem (41) zusätzlich dazu eingerichtet ist, das lichtumlenkende Element (40) entlang einer dritten Achse, nämlich einer so genannten Verschub-Achse (Z), zu verschieben, wobei die Verschub-Achse (Z) zu den mindestens zwei sich schneidenden Schwenk-Achsen (H, V) vorzugsweise senkrecht verläuft, wobei insbesondere die von der Lichtumlenkvorrichtung (4) auf den Flächenlichtmodulator (5) gelenkten Lichtstrahlen konvergieren oder divergieren, das Verstellsystem (41) drei Einstellschrauben (410, 411, 412), beispielsweise Kugelschrauben, aufweist.

2. Lichtmodul nach Anspruch 1, **wobei** die Einstellschrauben mechanisch und/oder elektromotorisch antreibbar sind.

3. Lichtmodul nach Anspruch 1 oder 2, **wobei** die mindestens zwei sich schneidenden Schwenk-Achsen (H, V) orthogonal zueinander stehen.

4. Lichtmodul nach Anspruch 3, **wobei** die mindestens zwei sich schneidenden Schwenk-Achsen eine vertikal verlaufende Achse (V) und eine horizontal verlaufende Achse (H) sind.

5. Lichtmodul nach einem der Ansprüche 1 bis 4, **wobei** das lichtumlenkende Element (40) als ein gekrümmter Spiegel, beispielsweise als ein Hohlspiegel, ausgebildet ist.

6. Lichtmodul nach Anspruch 5, **wobei** die lichtreflektierende Fläche (401) des gekrümmten Spiegels, die beispielsweise einen im Wesentlichen parabolischen und/oder hyperbolischen Verlauf aufweist, zwei Symmetrieachsen (401x, 401y) aufweist, wobei vorzugsweise die lichtreflektierende Fläche bezüglich einer oder beider der zwei Symmetrieachsen (401x, 401y) spiegelsymmetrisch ausgebildet ist, wobei beispielsweise eine erste Symmetrieachse (401x) horizontal verläuft und eine zweite Symmetrieachse (401y) vertikal verläuft.

7. Lichtmodul nach Anspruch 6, **wobei** jede Symmetrieachse (401x, 401y) mit der jeweiligen Schwenk-Achse (H, V) zusammenfällt.

8. Lichtmodul nach einem der Ansprüche 1 bis 7, **wobei** das lichtumlenkende Element (40) dazu eingerichtet ist, die auf das lichtumlenkende Element (40) einfallenden Lichtstrahlen in Bezug auf die Einfallsrichtung der auf das lichtumlenkende Element (40) einfallenden Lichtstrahlen rückwärts zu streuen.

9. Lichtmodul nach einem der Ansprüche 1 bis 8, **wobei** alle Bauelemente des Lichtmoduls (1) mit Ausnahme der Lichtumlenkvorrichtung (4) in dem Lichtmodul (1) im montierten Zustand unbewegbar angeordnet sind.

10. Lichtmodul nach einem der Ansprüche 1 bis 9, **wobei** der Flächenlichtmodulator (5) eine digital ansteuerbare Mikrospiegelvorrichtung, beispielsweise ein DMD-Chip ist.

11. Lichtmodul nach einem der Ansprüche 1 bis 10, **wobei** die Lichtumlenkvorrichtung (4) dazu eingerichtet ist, im Wesentlichen die gesamten auf die Lichtumlenkvorrichtung (4) einfallenden Lichtstrahlen in Form eines konvergierenden Strahlenbündels auf den Flächenlichtmodulator (5) zu lenken.

12. Kraftfahrzeugscheinwerfer mit mindestens einem Lichtmodul nach einem der Ansprüche 1 bis11.

## Claims

1. Light module for a motor vehicle headlamp comprising
- an illumination device (2) which is set up to generate light beams with a predetermined beam path (3)
- a light deflecting device (4), which is arranged downstream of the lighting device (2) for deflecting the predetermined beam path (3), and
- an area light modulator (5) arranged downstream of the light deflecting device (4) in the further course of the light beams, the light deflecting device (4) being set up to direct substantially all of the light beams incident on the light deflecting device (4) onto the area light modulator (5) in order to produce a luminous image (6) to be emitted on the area light modulator (5), and
- an imaging system (7) which is set up to image the luminous image (6) in front of the light module in the form of a light distribution, the light deflecting device (4) comprising a light deflecting element (40) and an adjustment system (41), the adjustment system (41) being set up to pivot the light deflecting element (40) about at least two intersecting pivot axes (H, V) and thereby changing the beam path (3') between the light deflecting device (4) and the surface light modulator (5), **characterized in that** the light deflecting device (4) further comprises a supporting frame (42) in which the light deflecting element (40) is enclosed, the adjustment system (41) is in engagement with the supporting frame (42) and is set up for this purpose, pivoting the support frame (42) with the light deflecting element (40) enclosed therein about the at least two intersecting pivot axes (H, V) and thereby changing the beam path (3') between the light deflecting device (4) and the surface light modulator (5), wherein the adjustment system (41) is additionally arranged to displace the light deflecting element (40) along a third axis, namely a so-called displacement axis (Z), wherein the displacement axis (Z) extends preferably perpendicularly to the at least two intersecting pivot axes (H, V), wherein in particular the light beams directed by the light deflecting device (4) onto the surface light modulator (5) converge or diverge, the adjustment system (41) has three adjusting screws (410, 411, 412), for example ball screws.

2. Light module according to claim 1, wherein the adjusting screws can be driven mechanically and/or by an electric motor.

3. Light module according to claim 1 or 2, wherein the at least two intersecting swivel axes (H, V) are orthogonal to each other.

4. Light module according to claim 3, wherein the at least two intersecting swivel axes are a vertically extending axis (V) and a horizontally extending axis (H).

5. Light module according to one of claims 1 to 4, wherein the light deflecting element (40) is designed as a curved mirror, for example as a concave mirror.

6. Light module according to claim 5, wherein the light reflecting surface (401) of the curved mirror, which for example has an essentially parabolic and/or hyperbolic shape, has two axes of symmetry (401x, 401y), wherein preferably the light reflecting surface is designed to be mirror-symmetrical with respect to one or both of the two axes of symmetry (401x, 401y), wherein for example a first axis of symmetry (401x) runs horizontally and a second axis of symmetry (401y) runs vertically.

7. Light module according to claim 6, wherein each axis of symmetry (401x, 401y) coincides with the respective pivot axis (H, V).

8. Light module according to any one of claims 1 to 7, wherein the light deflecting element (40) is arranged to backscatter the light rays incident on the light deflecting element (40) with respect to the direction of incidence of the light rays incident on the light deflecting element (40).

9. Light module according to one of claims 1 to 8, wherein all components of the light module (1), with the exception of the light deflecting device (4), are arranged immovably in the light module (1) in the mounted state.

10. Light module according to one of claims 1 to 9, wherein the area light modulator (5) is a digitally controllable micromirror device, for example a DMD chip.

11. Light module according to one of claims 1 to 10, wherein the light deflecting device (4) is arranged to direct substantially all of the light beams incident on the light deflecting device (4) in the form of a converging beam onto the area light modulator (5).

12. Motor vehicle headlamp with at least one light module according to one of claims 1 to 11.

## Revendications

1. Module d'éclairage pour un projecteur de véhicule automobile comprenant
- un dispositif d'éclairage (2), qui est conçu pour produire des rayons lumineux avec un trajet de rayons (3) prédéfini,
- un dispositif de déviation de la lumière (4), qui est disposé en aval du dispositif d'éclairage (2) pour dévier la trajectoire des rayons (3) prédéfinie, et
- un modulateur de lumière de surface (5) disposé en aval du dispositif de déviation de la lumière (4) dans la suite du parcours des rayons lumineux, le dispositif de déviation de la lumière (4) étant conçu pour diriger sur le modulateur de lumière de surface (5) sensiblement la totalité des rayons lumineux incidents sur le dispositif de déviation de la lumière (4), afin de produire sur le modulateur de lumière de surface (5) une image lumineuse (6) à émettre, ainsi que
- un système de reproduction (7) qui est conçu pour reproduire l'image lumineuse (6) sous la forme d'une répartition de la lumière devant le module d'éclairage, le dispositif de déviation de la lumière (4) comprenant un élément de déviation de la lumière (40) et un système de réglage (41), le système de réglage (41) étant conçu pour permettre à l'élément de déviation de la lumière (40) de pivoter autour d'au moins deux axes de pivotement (H, V) et modifier ainsi le trajet des rayons (3') entre le dispositif de déviation de la lumière (4) et le modulateur de lumière de surface (5), **caractérisé en ce que** le dispositif de déviation de la lumière (4) comprend en outre un cadre de support (42) dans lequel l'élément de déviation de la lumière (40) est encastré, le système de réglage (41) est en prise avec le cadre de support (42) et est adapté pour, de faire pivoter le cadre de support (42) avec l'élément de déviation de la lumière (40) qui y est encastré autour des au moins deux axes de pivotement (H, V) qui se coupent et de modifier ainsi le trajet des rayons (3') entre le dispositif de déviation de la lumière (4) et le modulateur de lumière plat (5), le système de réglage (41) étant en outre conçu pour déplacer l'élément de déviation de la lumière (40) le long d'un troisième axe, à savoir un axe dit de déplacement (Z), l'axe de déplacement (Z) étant vertical par rapport aux au moins deux axes de pivotement (H, V) étant de préférence perpendiculaire, les rayons lumineux dirigés par le dispositif de déviation de lumière (4) sur le modulateur de lumière plan (5) étant notamment convergents ou divergents, le système de réglage (41) comporte trois vis de réglage (410, 411, 412), par exemple des vis à billes.

2. Module d'éclairage selon la revendication 1, dans lequel les vis de réglage peuvent être entraînées mécaniquement et/ou par un moteur électrique.

3. Module d'éclairage selon la revendication 1 ou 2, dans lequel les au moins deux axes de pivotement (H, V) qui se coupent sont orthogonaux entre eux.

4. Module d'éclairage selon la revendication 3, dans lequel les au moins deux axes de pivotement qui se coupent sont un axe vertical (V) et un axe horizontal (H).

5. Module d'éclairage selon l'une quelconque des revendications 1 à 4, dans lequel l'élément de déviation de la lumière (40) est conçu comme un miroir incurvé, par exemple un miroir concave.

6. Module d'éclairage selon la revendication 5, dans lequel la surface réfléchissant la lumière (401) du miroir courbe, qui présente par exemple une allure sensiblement parabolique et/ou hyperbolique, présente deux axes de symétrie (401x, 401y), la surface réfléchissant la lumière étant de préférence symétrique par rapport à l'un des deux axes de symétrie (401x, 401y) ou aux deux, un premier axe de symétrie (401x) étant par exemple horizontal et un deuxième axe de symétrie (401y) étant vertical.

7. Module d'éclairage selon la revendication 6, dans lequel chaque axe de symétrie (401x, 401y) coïncide avec l'axe de pivotement (H, V) correspondant.

8. Module d'éclairage selon l'une des revendications 1 à 7, dans lequel l'élément de déviation de la lumière (40) est adapté pour diffuser les rayons lumineux incidents sur l'élément de déviation de la lumière (40) vers l'arrière par rapport à la direction d'incidence des rayons lumineux incidents sur l'élément de déviation de la lumière (40).

9. Module d'éclairage selon l'une des revendications 1 à 8, dans lequel tous les composants du module d'éclairage (1), à l'exception du dispositif de déviation de la lumière (4), sont disposés de manière immobile dans le module d'éclairage (1) à l'état monté.

10. Module d'éclairage selon l'une des revendications 1 à 9, dans lequel le modulateur de lumière de surface (5) est un dispositif à micro-miroir à commande numérique, par exemple une puce DMD.

11. Module d'éclairage selon l'une des revendications 1 à 10, dans lequel le dispositif de déviation de lumière (4) est adapté pour diriger sensiblement l'ensemble des rayons lumineux incidents sur le dispositif de déviation de lumière (4) sous la forme d'un faisceau convergent sur le modulateur de lumière surfacique (5).

12. Projecteur de véhicule automobile comportant au moins un module d'éclairage selon l'une des revendications 1 à 11.
